# EUROPEAN PATENT APPLICATION

(11) **EP 3 518 136 A1**
(43) Date of publication of application: **31.07.2019**
(21) Application number: 18153456.1
(22) Date of filing: 25.01.2018
(51) Int. Cl.: G06F 21/57, G06F 21/78

(54) **A CIRCUIT ARRANGEMENT AND METHOD OF OPERATING A CIRCUIT ARRANGEMENT**

(71) Applicant: Vestel Elektronik Sanayi ve Ticaret A.S., 45030 Manisa (TR)
(72) Inventor: YILMAZ, Evren Gökhan, 45030 Manisa (TR); EGEMEN, Tufan, 45030 Manisa (TR); GÜRGEN, Engin, 45030 Manisa (TR)
(74) Representative: Flint, Adam

(57) **Abstract**

A circuit arrangement (100) for an electronic device comprises a main processor (101) for controlling operation of an electronic device in which the circuit arrangement is provided and data storage (112) that is electrically isolated from the main processor (101). The main processor (101) is arranged to cause status data concerning the current status of one or more hardware units or software of the electronic device to be stored in the data storage (112). In the event that the main processor (101) resets, the main processor (101) is arranged to retrieve the status data stored in the data storage (112) so that the status of the electronic device is restored following reset of the main processor (101).

## Description

### Technical Field

The present disclosure relates to a circuit arrangement and method of operating a circuit arrangement.

### Background

Electronic devices are in wide use. Some electronic components of electronic devices can be susceptible to failure. For example, an event such as an electrostatic discharge (ESD) may cause a processor to fail and/or for data stored in an electronic storage such as a RAM (random access memory) to change or be lost, resulting in a malfunction of the electronic device.

### Summary

According to a first aspect disclosed herein, there is provided a circuit arrangement for an electronic device, the circuit arrangement comprising:
a main processor for controlling operation of an electronic device in which the circuit arrangement is provided;
data storage that is electrically isolated from the main processor;
the main processor being arranged to cause status data concerning the current status of one or more hardware units or software of the electronic device in which the circuit arrangement is provided to be stored in the data storage;
the main processor being arranged to retrieve the status data stored in the data storage in the event that the main processor resets so that the status of the electronic device in which the circuit arrangement is provided is restored following reset of the main processor.

In an example, the circuit arrangement comprises a second processor that is electrically isolated from the main processor and which is arranged to determine if the main processor requires resetting and to cause the main processor to reset in accordance with the determination.

In an example, the main processor is arranged to periodically send a status message to the second processor to confirm to the second processor that the main processor is operating.

In an example, the second processor is arranged to periodically determine if the main processor requires resetting.

For example, the second processor may periodically poll the main processor and, if no response is received (for example within a predetermined time period), the second processor determines that the main processor requires resetting.

In an example, the second processor is arranged to determine that the main processor requires resetting by requesting a response from the main processor and determining that the response received from the main processor is not the response that was requested. The requested may be for any response from the main processor, or may be for a specific response, e.g. a specific format or specific data.

In an example, the data storage is electrically isolated from and in communication with the main processor via an opto-isolator.

In an example, the circuit arrangement the main processor is arranged to cause status data to be stored in the data storage periodically.

In an example, the main processor is arranged to cause status data to be stored in the data storage immediately following a change in the status data.

There may also be provided an electronic device comprising a circuit arrangement as described above.

According to a second aspect disclosed herein, there is provided a method of restoring a status of an electronic device, the method comprising:
causing, by a main processor of the electronic device, data concerning the current status of one or more hardware units or software of the electronic device to be stored in a data storage which is electrically isolated from the main processor; and
retrieving the status data stored in the data storage in the event that the main processor resets so that the status of the status of the electronic device is restored following reset of the main processor.

In an example, the method comprises determining, by a second processor that is electrically isolated from the main processor, that the main processor requires resetting, and the second processor causing the main processor to reset in accordance with the determination.

In an example, the method comprises the main processor sending a status message to the second processor at predetermined intervals to confirm to the second processor that the main processor is operating, and wherein the second processor determines that the main processor requires resetting by determining that the second processor has not received a status message from the main processor within a predetermined interval.

In an example, the method comprises the second processor requesting a specific response from the main processor, and wherein the second processor determines that the main processor requires resetting by determining that the response received from the main processor is not the specific response that was requested.

In an example, the method comprises the main processor causing status data to be stored in the data storage periodically.

In an example, the method comprises the main processor causing status data to be stored in the data storage immediately following a change in the status data.

There may also be provided a circuit arrangement for an electronic device, the circuit arrangement comprising:
a main processor for controlling operation of an electronic device in which the circuit arrangement is provided;
data storage;
the main processor being arranged to cause status data concerning the current status of one or more hardware units or software of the electronic device in which the circuit arrangement is provided to be stored in the data storage; and
a second processor which is arranged to determine if the main processor requires resetting and to cause the main processor to reset in accordance with the determination;
the main processor being arranged to retrieve the status data stored in the data storage in the event that the main processor resets so that the status of the electronic device in which the circuit arrangement is provided is restored following reset of the main processor.

In an example, the second processor is electrically isolated from the main processor.

### Brief Description of the Drawings

To assist understanding of the present disclosure and to show how embodiments may be put into effect, reference is made by way of example to the accompanying drawings in which:
Figure 1 shows schematically an example circuit arrangement; and
Figure 2 shows a flowchart of an example of a method.

### Detailed Description

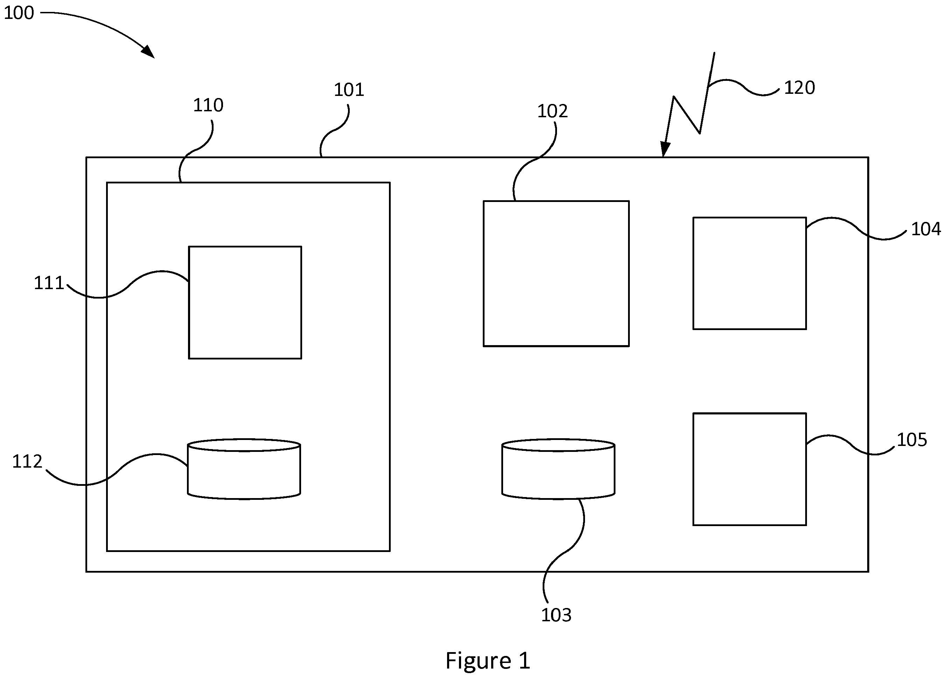

Figure 1 shows schematically an example circuit arrangement 100 comprising a plurality of components. The components of the circuit arrangement 100 in this example are a board 101, a main processor 102, a first data storage 103, a video processor 104, an audio processor 105, and a second data storage 112. In other examples, not all of these components may be present and other components may or may not be present.

The board 101 may be a circuit board, such as for example a motherboard or mainboard of an electronic device. Examples of electronic devices include a television set, a display screen or panel, a PVR (personal video recorder), a DVD player, Blu Ray player, a set-top box, a desktop or laptop or tablet computer, etc., a video game console, a cellular phone (including a so-called "smart phone"), a printer, an electric appliance such as a "white goods" item such as a washing machine, a tumble dryer, a combined washing machine and tumble dryer, a dishwasher, a refrigeration apparatus such as a fridge or freezer or combined fridge-freezer, etc., etc. Electronic devices comprise various electronic components. For example, most televisions and other display devices comprise a printed circuit board, often referred to as a "mainboard", for controlling the display and other functions. There may also be a power board, which includes or is connected to a voltage transformer to provide supply voltages from an incoming mains power supply to one or more components of the device.

In this example, the components are all installed on the same board 101. In other examples, one or more of the components may be installed on separate boards (not shown in Figure 1).

The main processor 102 is operably coupled, e.g. via wired connection, to each of the first data storage 103, video processor 104, and audio processor 105. When one or more components are on a separate board, the main processor 102 may still be operably coupled to these components, e.g. via a wired connection.

The main processor 102 is also operably coupled to the second data storage 112. However, the second data storage 112 is electrically isolated from at least the main processor 102. In this example, the second data storage 112 is installed on a portion 110 of the board 101 that is electrically isolated from the main processor 102. In other examples, the second data storage 112 may be installed on a separate board from the main processor 102 which is electrically isolated from the board on which the main processor 102 is installed. The data storage 112 and the main processor 102 can communicate with each other whilst maintaining the electrical isolation. For example, data storage 112 and the main processor 102 can communicate with each other via an opto-isolater (also called an optocoupler, photocoupler, or optical isolator). Other arrangements are possible. In addition, specific shielding may be provided to specifically shield the second data storage 112 (or board on which the second data storage 112 is installed) from an ESD event 120.

Video and audio processors are known in the art and so are not discussed in detail herein. The video processor 104 and audio processor 105 in Figure 1 are examples of components which may be installed on the board 101. It is understood that the board 101 may comprise many more components than shown in Figure 1.

The first data storage 103 is an electronic storage for use by the main processor 102 during normal operation of the electronic device. For example, the first data storage 103 may be a volatile memory, such as RAM, or a non-volatile memory, as known in the art.

If the board 101 is subject to an ESD event 120, one or more of the components may malfunction or fail. For example, the ESD event 120 may cause the main processor 102 to malfunction or even fail. As another example, the ESD event 120 may cause one or more data values stored in the first data storage 103 to change. It is appreciated that one or more of the components may malfunction or fail for other reasons, such as because of bugs in software, overheating, etc.

As mentioned above, the second storage device 112 is electrically isolated from the other components (main processor 102, first storage device 103, video processor 104 and audio processor 105). Hence, an ESD event 120 affecting the other components will not affect the second storage device 112, which is located on the electrically isolated portion 110 of the board 101. This means that data stored in the second data storage 112 will not be susceptible to corruption by the ESD event 120. The same is true in examples in which the second data storage 112 is located on a separate board which is electrically isolated from the board 101 shown in Figure 1.

Following an ESD event 120 which causes a failure to one or more of the first storage device 103, video processor 104, audio processor 105, or the main processor 102 itself, the main processor 102 can therefore rely on data stored in the second data storage 112 for the purposes of restoring the status of the electronic device. This is explained in more detail below.

In some examples, the circuit arrangement 100 comprises a second processor 111. The second processor 111 is electrically isolated from the main processor 102. In Figure 1, the second processor 111 is shown installed in the electrically isolated portion 110 of the board 101 along with the second data storage 112. The second processor 111 may be installed on a second electrically isolated portion of the board 101 separate from the electrically isolated portion 110 on which the second data storage 112 is installed (not shown in Figure 1).

In a similar manner as described above in relation to the second storage device 112, the second processor 111 may be installed on a separate board from the main processor 102. Hence, it is understood that the above description relating to the electrical isolation of the second storage 112 applies to the second processor 111. For example, the second processor 111 may be electrically isolated from the main processor 102 by way of an opto-isolator or similar device. The second processor 111 may also be provided with shielding against ESD events.

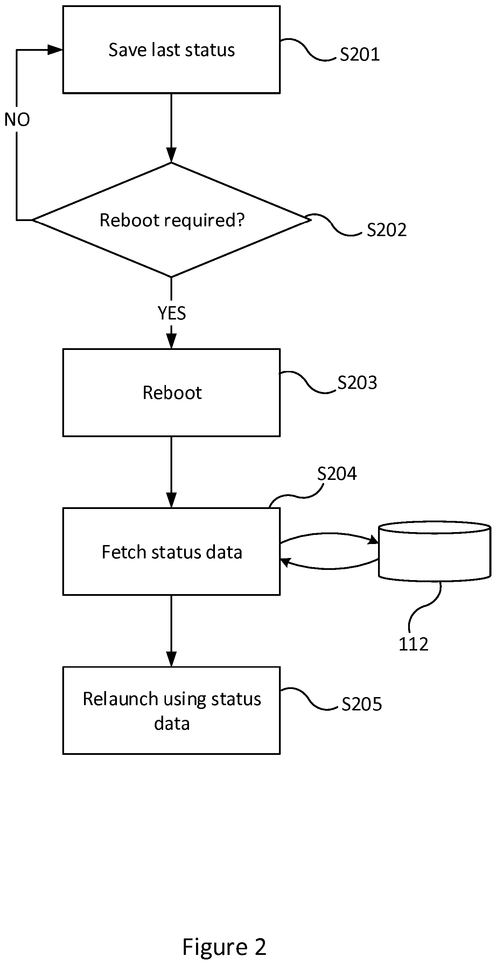

Figure 2 shows a flowchart of a first example of a method. At S201, the main processor saves status information to the second data storage 112. S201 is performed during normal operation of the electronic device (i.e. before a failure occurs).

The status information may in general relate to software and/or hardware. The status information may relate to a current software task being executed by the main processor 102. For example, a user may be using the electronic device to "surf" or browse the Internet, watch a video, listen to music, play a computer game, navigate a menu, view a broadcast, or many other tasks. Examples of status information include a last visited URL, browser status, last watched video, time or packet number, etc. representing the current time of a video being viewed or audio being listened to, menu status, game information, broadcast channel, etc. The status information may relate to a current status of one or more hardware components. For example, a current operational state of the video processor 104 (such as a last decoded frame of a video, brightness or contrast settings, etc.), the audio processor 105 (such as an audio codec value, stereo, bass and treble or other equaliser settings, etc.), or of any other hardware component installed on the board 101.

In some examples, the main processor 102 may cause status data to be stored in the second data storage 112 periodically. That is, the main processor 102 may send status data to the second data storage 112 at predetermined time intervals (e.g. once every few milliseconds, every few hundred milliseconds, or once a second, or every few seconds, etc.). In examples in which the second processor 111 is provided, the main processor 102 may be configured to access the second data storage 112 via the second processor 111. That is, the main processor 102 may provide updated data values to the second processor 111, and the second processor 111 then stores these values to the second data storage 112.

In other examples, the main processor 102 may cause status data to be stored in the second data storage 112 immediately following a change in one or more of the status data. That is, every time the main processor 102 effects or detects a change to the status data, the main processor 102 will immediately (i.e. as soon as possible, e.g. on the next clock cycle) send at least the one or more updated status data values to the second data storage 112.

At S202, it is determined whether a reboot is required. This may be performed by the main processor 102 itself. For example, the main processor 102 may determine a fault with a component, such as for example a video processor 104. In other examples, whether a reboot is required may be determined by hardware separate from the main processor 102. An example of suitable hardware is a watchdog timer, as known per se in the art.

In examples in which the second processor 111 is provided, the second processor 111 may be arranged to determine whether a reboot is required at S202.

As a first example, the main processor 102 may be arranged to periodically send a status message (which may be for example a single bit or byte of data) to the second processor 111 to confirm to the second processor 111 that the main processor 102 is operating. That is, the main processor 102 sends a signal to the second processor 111 once every predetermined time interval. In this example, the second processor 111 is configured to make a positive determination that a reboot is required at S202 if the status message has not been received by the second processor 111 for longer than the predetermined time interval. The predetermined time interval may be for example a few milliseconds, a few hundred milliseconds, a second, a few seconds, etc.

As s second example, the second processor 111 may request a response from the main processor 102 and determine that a reboot is required if the response received from the main processor 102 is not in accordance with the request. The request may be a request for (any) response, in which case the second processor 111 may determine that a reboot is required if no response is received (or not received within a certain time interval). Alternatively, the request may be for a specific response, e.g. of specific data or in a specific format. The second processor 111 may then determine that a reboot is required if the received response does not match the specific (expected) response. For example, the specific response may be some data along with a checksum or hash value of the data generated by the main processor 102. The second processor 111 is then able to independently check the checksum or hash value and determine a reboot is required if there is an inconsistency.

The second processor 111 may be configured to determine that a reboot is required in accordance with both of the examples mentioned above, whichever occurs first.

If no reboot is required, as determined at S202, the main processor 102 continues saving the (most current) status data to the second data storage 112, as described above. S201 is therefore performed during normal operation of the electronic device.

If a reboot or reset is required then the method proceeds to S203 and a reboot or reset is performed. Initiation of the reboot may be performed by the main processor 102, e.g. in cases where the fault is with a component other than the main processor 102, or may be initiated by separate hardware such as a watchdog timer. In examples in which the second processor 111 is provided, the second processor 111 may initiate the reboot.

At S204, following the reboot, the main processor 102 fetches the previously stored status data from the second storage device 112. In examples in which the main processor 102 is not directly connected to the second data storage 112 (when the second processor 111 is provided), the main processor 102 may request the data values from the second processor 111.

At S205, the main processor 102 restores its status, and the status of any related components on the board 101 and/or generally of the electronic device in which the board 101 is mounted, based on the fetched status data. This may comprise reloading a specific URL, resuming a video (e.g. from a specific timestamp), resuming audio playback, selecting a particular broadcast channel for playback, restoring previous audio and picture settings, etc. as specified in the status data.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A circuit arrangement for an electronic device, the circuit arrangement comprising:
a main processor for controlling operation of an electronic device in which the circuit arrangement is provided;
data storage that is electrically isolated from the main processor;
the main processor being arranged to cause status data concerning the current status of one or more hardware units or software of the electronic device in which the circuit arrangement is provided to be stored in the data storage;
the main processor being arranged to retrieve the status data stored in the data storage in the event that the main processor resets so that the status of the electronic device in which the circuit arrangement is provided is restored following reset of the main processor.

2. A circuit arrangement according to claim 1, comprising a second processor that is electrically isolated from the main processor and which is arranged to determine if the main processor requires resetting and to cause the main processor to reset in accordance with the determination.

3. A circuit arrangement according to claim 2, wherein the main processor is arranged to periodically send a status message to the second processor to confirm to the second processor that the main processor is operating.

4. A circuit arrangement according to claim 2 or claim 3, wherein the second processor is arranged to periodically determine if the main processor requires resetting.

5. A circuit arrangement according to any of claims 2 to 4, wherein the second processor is arranged to determine that the main processor requires resetting by requesting a response from the main processor and determining that the response received from the main processor is not the response that was requested.

6. A circuit arrangement according to any of claims 1 to 5, wherein the data storage is electrically isolated from and in communication with the main processor via an opto-isolator.

7. A circuit arrangement according to any of claims 1 to 6, wherein the main processor is arranged to cause status data to be stored in the data storage periodically.

8. A circuit arrangement according to any of claims 1 to 7, wherein the main processor is arranged to cause status data to be stored in the data storage immediately following a change in the status data.

9. An electronic device comprising a circuit arrangement according to any of claims 1 to 8.

10. A method of restoring a status of an electronic device, the method comprising:
causing, by a main processor of the electronic device, data concerning the current status of one or more hardware units or software of the electronic device to be stored in a data storage which is electrically isolated from the main processor; and
retrieving the status data stored in the data storage in the event that the main processor resets so that the status of the status of the electronic device is restored following reset of the main processor.

11. A method according to claim 10, comprising determining, by a second processor that is electrically isolated from the main processor, that the main processor requires resetting, and the second processor causing the main processor to reset in accordance with the determination.

12. A method according to claim 11, comprising the main processor sending a status message to the second processor at predetermined intervals to confirm to the second processor that the main processor is operating, and wherein the second processor determines that the main processor requires resetting by determining that the second processor has not received a status message from the main processor within a predetermined interval.

13. A method according to claim 11 or claim 12, comprising the second processor requesting a specific response from the main processor, and wherein the second processor determines that the main processor requires resetting by determining that the response received from the main processor is not the specific response that was requested.

14. A method according to any of claims 10 to 13, comprising the main processor causing status data to be stored in the data storage periodically.

15. A method according to any of claims 10 to 14, comprising the main processor causing status data to be stored in the data storage immediately following a change in the status data.
